# EUROPEAN PATENT APPLICATION

(11) **EP 2 816 811 A1**
(43) Date of publication of application: **24.12.2014**
(21) Application number: 13189383.6
(22) Date of filing: 18.10.2013
(51) Int. Cl.: H04N 21/41, H04N 21/434, H04N 21/4623, H04N 21/643, H04N 21/438

(54) **Content receiving apparatus, display device and content receiving method thereof**

(30) Priority: 17.06.2013 KR 20130068891
(71) Applicant: Samsung Electronics Co., Ltd, Gyeonggi-do 443-742 (KR)
(72) Inventor: Kim, Moon-ju, Chungcheongnam-do (KR)
(74) Representative: Walaski, Jan Filip

(57) **Abstract**

Disclosed are a content receiving apparatus (1) according to the embodiments may separately transmit the image signal and the additional data used to decode the encoded content, to the display device and thus resources of the content receiving apparatus. The content receiving apparatus includes a receiver which receives a content from the outside, a communication part which is capable of communicating with a display device through a plurality of logical paths, and a controller which, upon receiving additional data information from the display device to decode an encoded content, controls the communication part to transmit an image signal of the encoded content to the display device through a first logical path, and to transmit additional data corresponding to the image signal to the display device through a second logical path that is different from the first logical path. Thus resources of the content receiving apparatus and the display device may be saved and a user may change a channel more promptly.

## Description

The present invention relates to a content receiving apparatus, a display device and a calibration method thereof, and more particularly, to a broadcasting content receiving apparatus not performing a decoding function for decoding an encoded content, a display device performing a decoding function for decoding an encoded content and a content receiving method thereof in which the content receiving apparatus separately transmits an image signal of a content and additional data used to decode the encoded content to the display device to enable a user to view an image of the encoded content.

With the development of digital multi-channel broadcasting, a conditional access system (CAS) is used.

The CAS allows only a subscriber who has paid content fee to decode and view an encoded content which is encoded for protection.

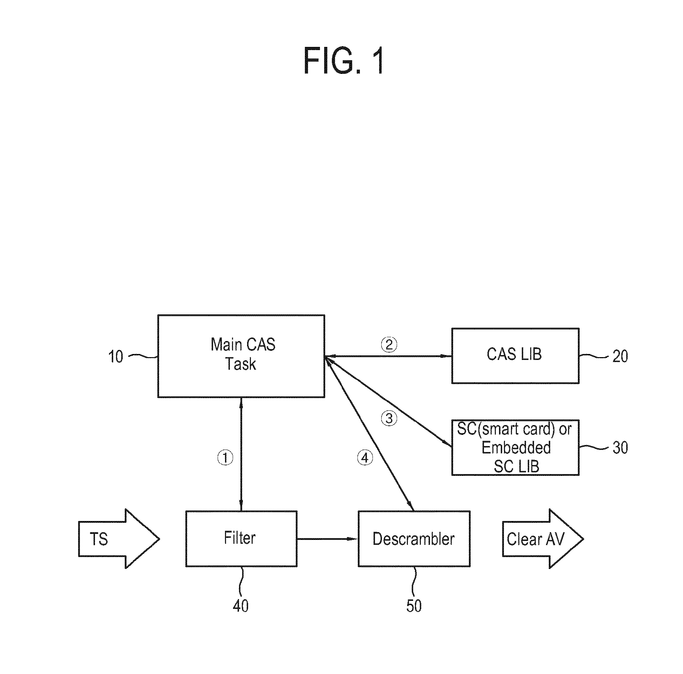

FIG. 1 is a schematic view of the CAS. As shown therein, the CAS includes a main work block 10, a CAS library 20, a smart card (SC) or an embedded SC library 30, a filter 40 and a descrambler 50.

An encoded digital broadcasting signal which is received in the form of a transport stream (TS) further includes additional information such as a program association table (PAT), a program map table (PMT) and a conditional access table (CAT) as well as the encoded content.

Firstly, the filter 40 extracts the additional information such as the PAT, PMT and CAT from the TS signal (①). The main work block 10 parses the extracted additional information, identifies a packet identification (ID) from the respective tables, transmits the packet ID to the CAS library 20 and the SC or the embedded SC library 30 and compares the packet ID with data of the libraries 20 and 30, determines whether a user has the authority to view the content, and obtains a control word (CW) for decoding the encoded content (② and ③). The main work block 10 transmits the obtained CW to the descrambler 50 provided in a set-top box (④).

The descrambler 50 of the content receiving apparatus decodes the encoded content by using the received CW, and allows the user having the authority to view the content, i.e., allows the subscriber to view the broadcasting.

A user who has a content receiving apparatus that does not support the CAS may not view an encoded broadcasting content.

To view the encoded broadcasting content, a display device which supports the CAS may be connected to a content receiving apparatus that does not support the CAS.

A user may not view an encoded real-time broadcasting through a display device that does not support the CAS, and the control of the encoded real-time broadcasting is not considered depending on availability of the CAS.

A multi program transport stream (MPTS) including additional data used to decode the encoded real-time broadcasting is transmitted to the display device and accordingly a bandwidth between the content receiving apparatus and the display device increases. This also causes the display device to take more time to change its channel. If the MPTS is converted into a single program transport stream (SPTS) and then transmitted to the display device to improve transmission efficiency, the additional data necessary for decoding the content should be transmitted together with the SPTS. The display device should receive and separate the SPTS added with the additional data, and filter the additional information.

Due to the aforementioned additional process, the content receiving apparatus and the display device may waste their resources, and deteriorate efficiency. Also, a user suffers inconvenience due to a slower speed of changing a channel.

Accordingly, one or more exemplary embodiments provide a content receiving apparatus, a display device and a control method thereof which saves resources and accelerates a channel changing speed as the content receiving apparatus separately transmits an image signal and additional data to the display device without a process for adding the additional data to the image signal and the display device does not need to separate the image signal and the additional data and to filter the additional information.

The foregoing and/or other aspects may be achieved by providing a content receiving apparatus including a receiver which receives a content from the outside, a communication part which is capable of communicating with a display device through a plurality of logical paths, and a controller which, upon receiving additional data information from the display device to decode an encoded content, controls the communication part to transmit an image signal of the encoded content to the display device through a first logical path, and to transmit additional data corresponding to the image signal to the display device through a second logical path that is different from the first logical path.

The controller may receive connection request information comprising information on availability of the encoded content of the display device, and transmit the image signal of the encoded content to the display device based on the information on availability.

The controller may determine availability of the encoded content, and if it is determined that the encoded content is not available, suspends transmission of the image signal of the encoded content to the display device, and transmit a message showing the suspended transmission of the image signal of the encoded content to the display device.

The additional data may include a program association table (PAT), a program map table (PMT) and a conditional access table (CAT), entitlement management message (EMM) data and entitlement control message (ECM) data.

The plurality of logical paths may be formed by a TCP/IP port of internet protocol (IP) communication.

The foregoing and/or other aspects may be achieved by providing a calibration method of a content receiving apparatus, the calibration method including receiving a content from the outside, receiving additional data information from a display device to decode an encoded content, transmitting an image signal of the encoded content to the display device through a first logical path, and transmitting additional data corresponding to the image signal to the display device through a second logical path that is different from the first logical path.

The method further may include receiving connection request information comprising information on availability of an encoded content of the display device, and transmitting the image signal of the encoded content to the display device based on the information on availability.

The transmitting the image signal may include determining availability of the encoded content, suspending transmission of the encoded content to the display device if it is determined that the encoded content is not available, and transmitting to the display device a message showing the suspended transmission of the encoded content.

The additional data may include a PAT, PMT, CAT and EMM data and ECM data.

The plurality of logical paths may be formed by a TCP/IP port of IP communication.

The foregoing and/or other aspects may be achieved by providing a display device including: a communication part which is capable of communicating with a content receiving apparatus through a plurality of logical paths; an image processor which processes the image signal transmitted to the communication part; a display unit which displays the processed image signal thereon; and a controller which controls the communication part to transmit additional data information to the content receiving apparatus to decode an encoded content and receive an image signal of the encoded content from the content receiving apparatus through a first logical path, and to receive the additional data corresponding to the image signal through a second logical path that is different from the first logical path, and controls the image processor to decode the image signal of the encoded content by using the received additional data.

The controller may transmit to the content receiving apparatus connection request information comprising information on availability of the encoded content and receives an image signal of the encoded content from the content receiving apparatus.

The controller may receive from the content receiving apparatus a message showing the suspended transmission of the image signal of the encoded content if it is determined that the encoded content is not available.

The additional data may include a PAT, PMT, and CAT, and EMM data and ECM data.

The plurality of logical paths may be formed by a TCP/IP port of IP communication.

The foregoing and/or other aspects may be achieved by providing a calibration method of a display device, the calibration method including: transmitting additional data information to the content receiving apparatus to decode an encoded content, receiving an image signal of the encoded content from the content receiving apparatus through a first logical path; receiving the additional data corresponding to the image signal through a second logical path that is different from the first logical path, and decoding an image signal of the encoded content by using the received additional data.

The method further may include transmitting to the content receiving apparatus connection request information comprising information on availability of the encoded content, and receiving an image signal of the encoded content from the content receiving apparatus.

The receiving the image signal may include receiving from the content receiving apparatus a message showing the suspended transmission of the image signal of the encoded content if it is determined that the encoded content is not available.

The additional data may include a PAT, PMT, and CAT, and EMM data and ECM data.

The plurality of logical paths may be formed by a TCP/IP port of IP communication.

The above and/or other aspects will become apparent and more readily appreciated from the following description of the exemplary embodiments, taken in conjunction with the accompanying drawings, in which:
FIG. 1 is a schematic view of a conditional access system (CAS);
FIG. 2 is a block diagram of a content receiving apparatus according to an embodiment;
FIG. 3 is a block diagram of a content receiving apparatus according to another embodiment;
FIG. 4 is a control flowchart showing operations of the content receiving apparatus according to the embodiment;
FIG. 5 is a control flowchart showing operations of the content receiving apparatus according to the another embodiment;
FIG. 6 is a block diagram of a display device according to the embodiment;
FIG. 7 is a block diagram of a display device according to the another embodiment;
FIG. 8 is a control flowchart showing operations of the display device according to the embodiment;
FIG. 9 is a control flowchart showing operations of the display device according to the another embodiment;
FIG. 10 is a flowchart showing operations performed between a conventional content receiving apparatus and a conventional display device; and
FIG. 11 is a flowchart showing operations performed between the content receiving apparatus and the display device according to the another embodiment.

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout.

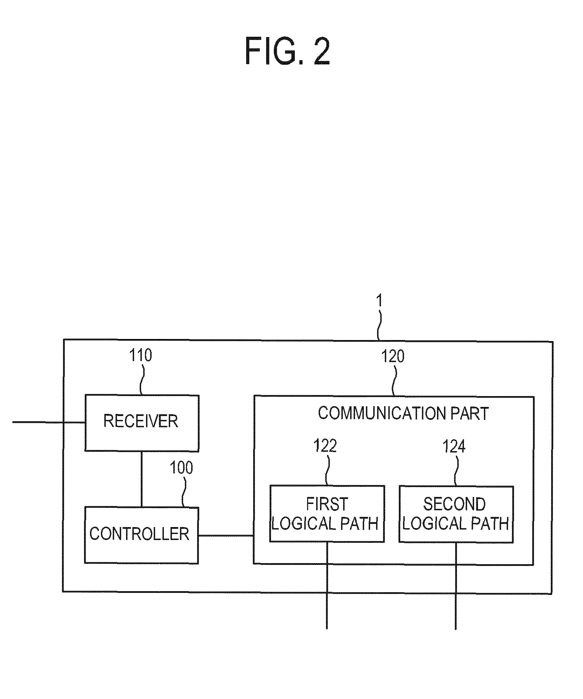

FIG. 2 is a block diagram of a content receiving apparatus 1 according to an embodiment. As shown therein, the content receiving apparatus 1 according to the embodiment may include a receiver 110, a communication part 120 including a first logical path 122 and a second logical path 124, and a controller 100.

The receiver 110 receives data from an external input source. The external input source may include a graphic card to convert generated data into an image signal and transmit the image signal to a display device 2, and may store therein a predetermined graphic card patch for color calibration. The external input source may be implemented as a personal computer (PC), but not limited thereto. The receiver 110 may receive data from the external input source according to digital visual interface (DVI), Component, high definition multimedia interface (HDMI), or serial digital interface (SDI).

The communication part 120 transmits a signal from the receiver 110 to the display device 2 by the controller 100. The communication part 120 may receive signals in a wired manner from an external input by being connected to various external input cables, or receive signals wirelessly according to predetermined wireless communication standards.

The communication part 120 may include a plurality of connectors (not shown) to which respective cables are connected individually. The communication part 120 may receive signals from the connected external input, e.g., receive broadcasting signals, image signals and data signals according to HDMI, universal serial bus (USB) and Component standards, or receive communication data through a communication network.

In addition to elements for receiving signals/data from the external input, the communication part 120 may further include various additional elements such as a wireless communication module (not shown) for wireless communication or a tuner (not shown) for tuning broadcasting signals, depending on a design type of the content receiving apparatus 1. The communication part 120 may transmit information/data/signals of the content receiving apparatus 1 to an external apparatus as well as receiving signals from the external apparatus. That is, the communication part 120 is not limited to the configuration for receiving signals from the external apparatus and may be implemented as an interface for interactive communication. The communication part 120 may receive a control signal from a plurality of control apparatuses for selecting a user interface (UI). The communication part 120 may include a communication module for known wireless local area communication such as Bluetooth, infrared (IR), ultra wideband (UWB) or Zigbee, and include a known communication port for wired communication. The communication part 120 may be used for various purposes including transmitting/receiving commands for manipulating a display, and transmitting/receiving data as well as receiving control signals for selecting UIs.

The communication part 120 may form a plurality of logical paths to perform a plurality of internet protocol (IP) communications with the display device 2. The communication part 120 may set the logical paths between the content receiving apparatus 1 and the display device 2 by using an agreed setup, and transmit and receive image signals and data. The communication part 120 may encourage communication between the same layers of the content receiving apparatus 1 and the display device 2. Otherwise, the communication part 120 may perform communication by using a data link layer or network layer rather than by using a physical layer between the content receiving apparatus 1 and the display device 2.

Preferably, the logical path may be provided by a transmission control protocol (TCP), which establishes a reliable path, monitors message transmission, and divides data transmitted by an application processor, into segments. The TCP provides service through a virtual circuit and provides communication with guaranteed transparency if the packet is lost, damaged, delayed or has a wrong order. The TCP checks availability of cross connection before transmitting connection-oriented protocol data, detects and controls errors and then controls a flow. The first logical path 122 may be set as a first virtual circuit port, and the second logical path 124 may be set as a second virtual circuit path. Since the first and second logical paths 122 and 124 are connected to the virtual ports, they may exchange data independently. Accordingly, the communication part 120 may have additional communication paths which are separated into the first logical path 122 and the second logical path 124.

The first and second logical paths 122 and 124 may be different physical logical paths, or may share the same physical path, but form a path only between the content receiving apparatus 1 and the display device 2 by connecting sockets on the same path to a preset address by the IP communication between the content receiving apparatus 1 and the display device 2.

If additional data information is transmitted to the content receiving apparatus 1 by the display device 2 to decode an encoded content, the controller 100 may control the communication part 120 to transmit an image signal of the encoded content to the display device 2 through the first logical path 122, and to transmit additional data corresponding to the image signal to the display device 2 through the second logical path 124 that is different from the first logical path 122.

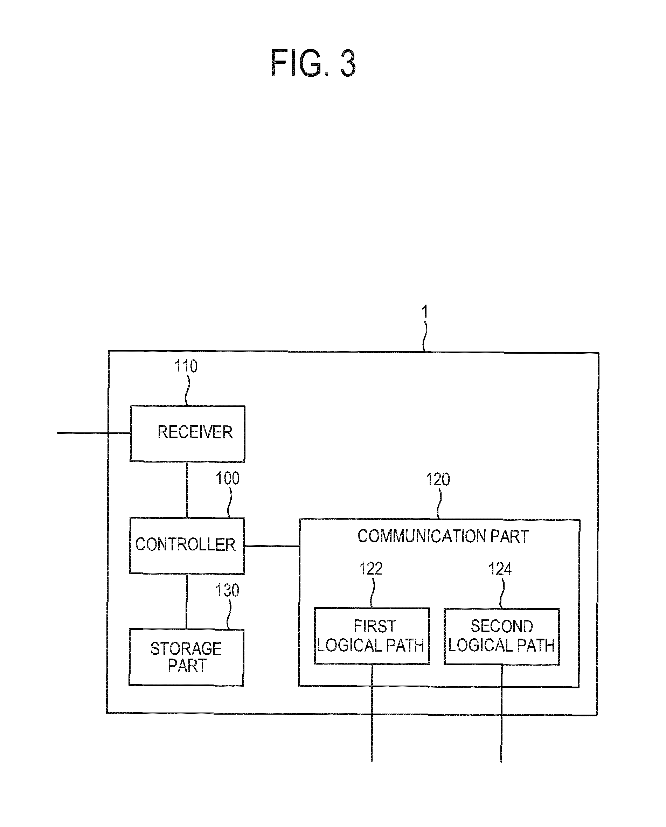

FIG. 3 is a block diagram of a content receiving apparatus 1 according to another embodiment. As shown therein, the content receiving apparatus 1 according to another embodiment may include a storage part 130 and a tuner (not shown) in addition to the elements in FIG. 2.

The storage part 130 may include a writable ROM in which data remain even upon cutoff of power to the content receiving apparatus 1, and any change may be reflected in respect of a user. That is, the storage part 130 may be implemented as one of a flash memory, an erasable programmable read only memory (EPROM) and an electrically erasable programmable read only memory (EEPROM). The storage part 130 may store image data decoded by a tuner (not shown) and various control signals and program information for contents.

The tuner acts like an image processor 220 of the display device 2, and details will be described later.

The controller 100 may receive connection request information including information on availability of an encoded content of the display device 2, and transmit an image signal of the encoded content to the display device 2 based on the information on availability. The controller 100 may determine availability of the encoded content, and if the encoded content is not available, suspends transmission of the image signal of the encoded content to the display device 2, and transmit to the display device 2 a message showing the suspended transmission of the image signal of the encoded content.

Additional data may include a program association table (PAT), a program map table (PMT) and a conditional access table (CAT), entitlement management message (EMM) data, and entitlement control message (ECM) data. The controller 100 may control the plurality of logical paths to be formed by a TCP/IP port of IP communication in the communication part 120.

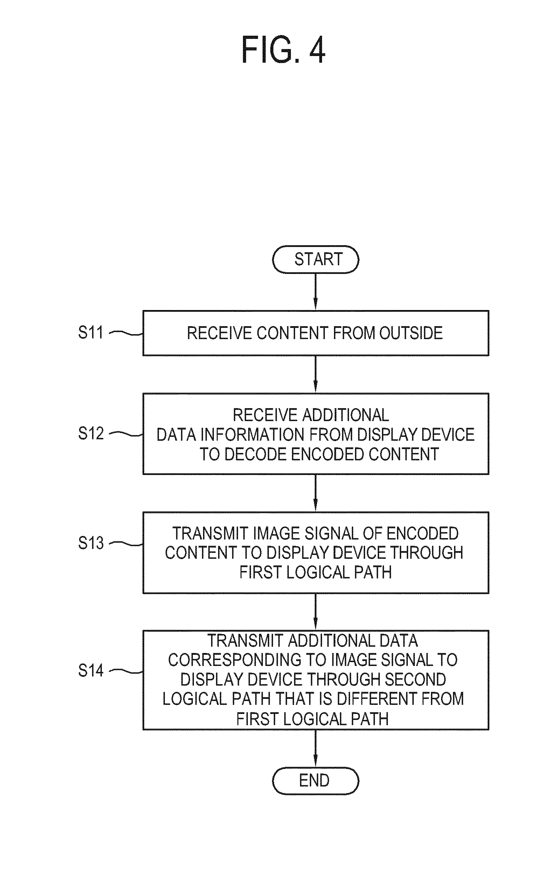

FIG. 4 is a control flowchart showing operations of the content receiving apparatus 1 according to the embodiment.

The receiver 110 receives content from the outside (S11). The additional data information is transmitted by the display device 2 through the second logical path 124 of the communication part 120 to decode the encoded content (S12). The controller 100 extracts the image signal and the additional data from the content transmitted from the outside, and transmits the image signal of the encoded content to the display device 2 through the first logical path 122 (S13). Simultaneously with the transmission of the image signal, the controller 100 transmits the additional data corresponding to the image signal to the display device 2 through the second logical path 124 that is different from the first logical path 122 (S14).

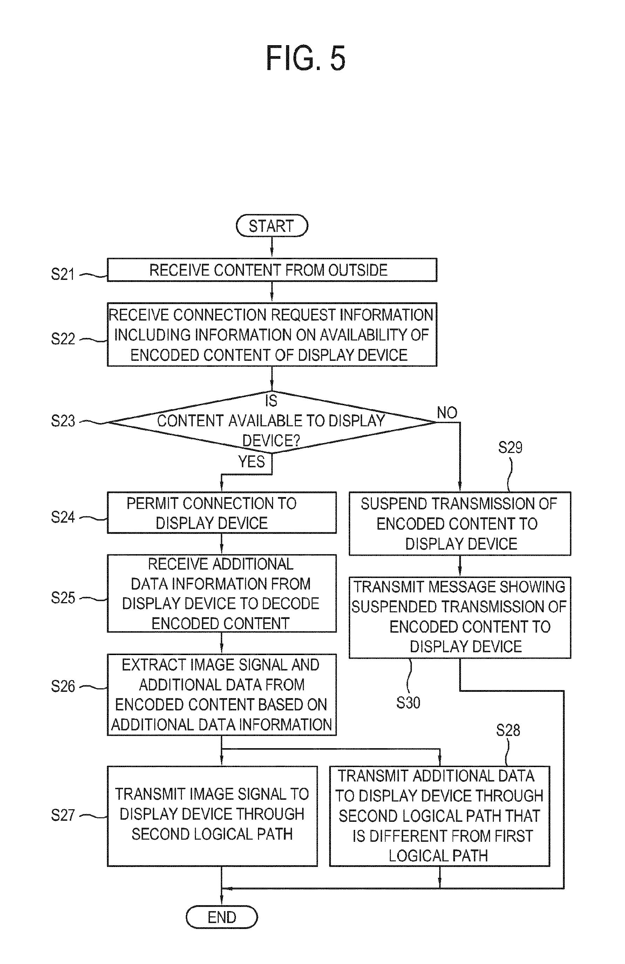

FIG. 5 is a control flowchart showing operations of the content receiving apparatus 1 according to another embodiment.

The receiver 110 receives content from the outside (S21). The controller 100 receives the connection request information including information on availability of the encoded content for the display device 2 (S22). The controller 100 determines whether the display device 2 may use the encoded content (S23). If the display device 2 may not use the encoded content, transmission of the encoded content to the display device 2 is suspended (S29). Also, a message showing the suspended transmission of the encoded content is transmitted to the display device (S30). If the display device 2 may use the encoded content, connection to the display device 2 is permitted (S24). The additional data information is transmitted by the display device 2 to decode the encoded content (S25). The additional data include the PAT, PMT and CAT, and EMM data and ECM data. The image signal and the additional data are extracted from the encoded content (S26). The extracted image signal is transmitted to the display device 2 through the first logical path 122 (S27). The extracted additional data are transmitted to the display device 2 through the second logical path 124 (S28).

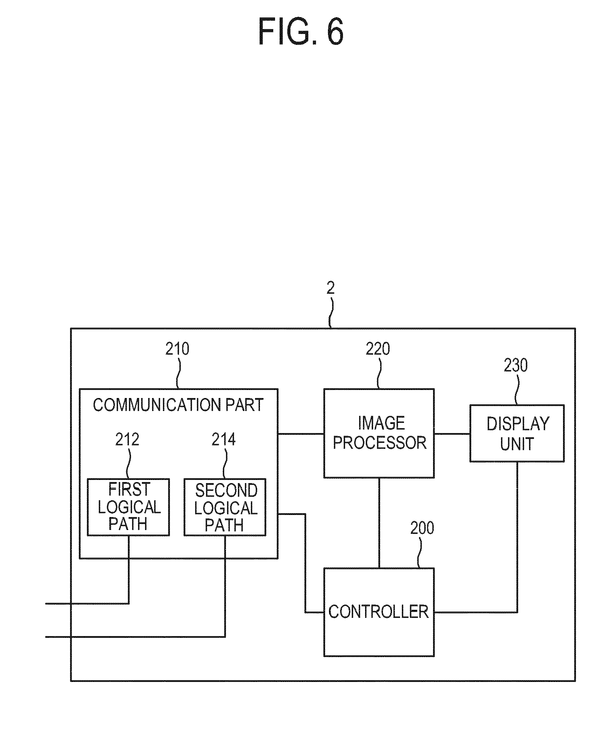

FIG. 6 is a block diagram of the display device 2 according to the embodiment. As shown therein, the display device 2 according to the embodiment may include a communication part 210 including a first logical path 212 and a second logical path 214, and an image processor 220, a display unit 230, and a controller 200.

The communication part 210 transmits a signal from an external input to the image processor 220 by the controller 200. The communication part 210 may receive signals in a wired manner from the external input by being connected to various external input cables, or receive signals wirelessly according to predetermined wireless communication standards.

The communication part 210 may include a plurality of connectors (not shown) to which respective cables are connected individually. The communication part 210 may receive signals from the connected external input, e.g., receive broadcasting signals, image signals and data signals according to HDMI, USB and Component standards, or receive communication data through a communication network.

In addition to elements for receiving signals/data from the external input, the communication part 210 may further include various additional elements such as a wireless communication module (not shown) for wireless communication or a tuner (not shown) for tuning broadcasting signals, depending on a design type of the display device 2. The communication part 210 may transmit information/data/signals of the content receiving apparatus 1 to an external apparatus as well as receiving signals from the external apparatus. That is, the communication part 210 is not limited to the configuration for receiving signals from the external apparatus and may be implemented as an interface for interactive communication. The communication part 210 may receive a control signal from a plurality of control apparatuses for selecting a user interface (UI). The communication part 210 may include a communication module for known wireless local area communication such as Bluetooth, infrared (IR), ultra wideband (UWB) or Zigbee, and include a known communication port for wired communication. The communication part 210 may be used for various purposes including transmitting/receiving commands for manipulating a display, and transmitting/receiving data as well as receiving control signals for selecting UIs.

The image processing operation of the image processor 220 may include, but not limited to, a decoding operation corresponding to an image format of image data, a de-interlacing operation for converting interlace image data into progressive image data, a scaling operation for adjusting image data into a preset resolution, a noise reduction operation for improving a quality of an image, a detail enhancement operation, a frame refresh rate conversion, etc.

The image processor 220 may be implemented as a system-on-chip (SoC) which integrates the aforementioned functions or may be implemented as an image processing board (not shown) which is formed by installing independent elements performing the aforementioned processes in a printed circuit board (PCB), and may be installed in the display device 2.

The image processor 220 may process a predetermined image signal to display an image based on the processed image signal. The image processor 220 may process a predetermined image signal to display an image including at least one graphic user interface (GUI). The image processed by the image processor 220 may be output to and displayed on the display device 2 such as a monitor or a television (TV). The display unit 230 may display an image thereon based on the image signal output by the image processor 220. The display unit 230 may be implemented as various displays including, without limitation, liquid crystal, plasma, light-emitting diode, organic light-emitting diode, surface-conduction electron-emitter, carbon nano-tube, and nano-crystal.

The display unit 230 may further include additional elements depending on its embodiment type. For example, the display unit 230 as a liquid crystal display, may include a liquid crystal display (LCD) panel (not shown), a backlight unit (not shown) emitting light to the LCD panel and a panel driving substrate (not shown) driving the LCD panel.

The display unit 230 displays an image thereon based on the image signal processed by the image processor 220. The displaying type of the display unit 230 may include liquid crystal display (LCD), plasma display panel (PDP), organic light emitting diode (OLED), etc. In such a case, the display unit 230 may include an LCD panel, PDP panel or an OLED panel.

The display unit 230 may display an image and a color calibration process. The display unit 230 may include a display panel to display an image thereon, and a panel drive the display panel to process an input image and display an image thereon, but not limited thereto. The image signal which is input by an external input source through the communication part 210 may be decoded, deinterlaced, scaled and processed to be displayed on the display unit 230.

The controller 200 may control the communication part 210 to transmit additional data information to the content receiving apparatus 1 to decode the encoded content, receive an image signal of the encoded content from the content receiving apparatus 1 through the first logical path 212, and to receive additional data corresponding to the image signal through the second logical path 214 that is different from the first logical path 212, and may decode the image signal of the encoded content by using the received additional data.

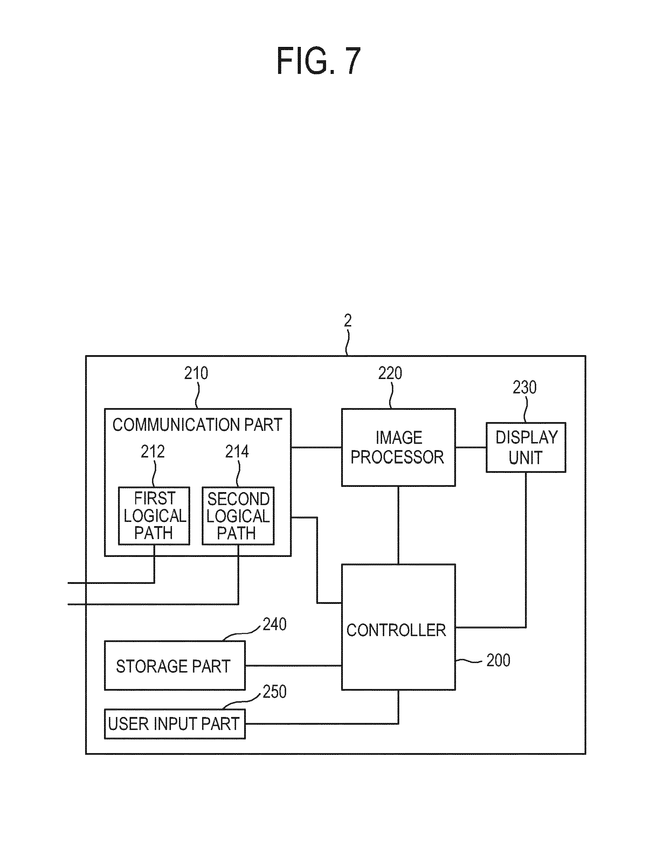

FIG. 7 is a block diagram of a display device 2 according the another embodiment. As shown therein, the display device 2 according to the another embodiment may further include a storage part 240 and a user input part 250 in addition to the elements shown in FIG. 6.

The storage part 240 may include a writable ROM in which data remain even upon cutoff of power to the display device 2, and any change may be reflected in respect of a user. That is, the storage part 240 may be implemented as one of a flash memory, an EPROM and an EEPROM. The storage part 240 may store image data decoded by a tuner therein temporarily, and may also store various control signals and program information for contents.

The user input part 250 transmits preset various control commands or information to the controller 200 according to a user's manipulation and input. The user input part 250 is implemented as a menu key or an input panel that is installed in an external part of the display device 2, or as a remote controller that is separated and spaced from the display device 2. Otherwise, the user input part 250 may be integrally formed in the display unit 230. If the display unit 230 is a touch screen, a user may touch an input menu (not shown) displayed on the display unit 230 to transmit a preset command to the controller 200.

The controller 200 may transmit to the content receiving apparatus 1 connection request information including information on availability of the encoded content, and receive an image signal of the encoded content from the content receiving apparatus 1. If it is determined that the encoded content is not available, the controller 200 may receive a message showing suspended transmission of the image signal of the encoded content from the content receiving apparatus 1. The controller 200 may control the plurality of the logical paths to be formed by the TCP port of IP communication in the communication part 210.

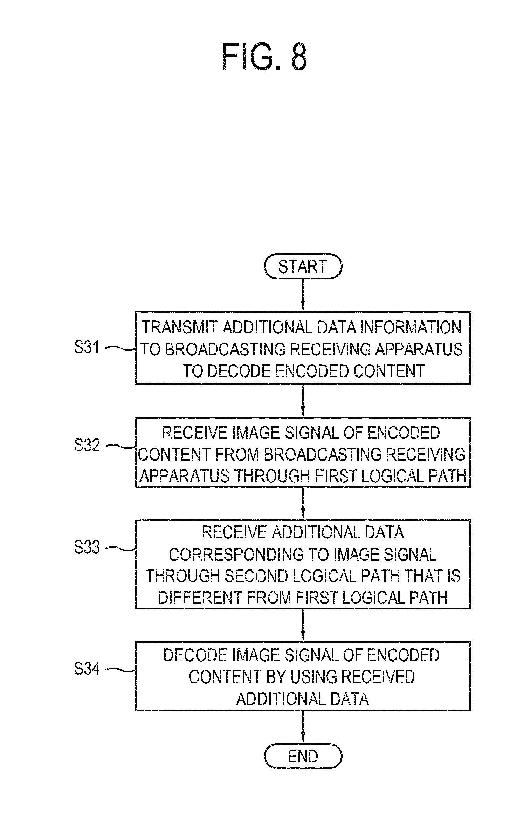

FIG. 8 is a control flowchart showing operations of the display device 2 according to the embodiment.

The additional data information is transmitted to the content receiving apparatus 1 to decode the encoded content (S31). The image signal of the encoded content is transmitted by the content receiving apparatus 1 to the display device 2 through the first logical path 212 (S32). The additional data corresponding to the image signal is transmitted through the second logical path 214 that is different from the first logical path 212 (S33). The first and second logical paths 212 and 214 may be different physical paths, or may share the same physical path, but may form a path only between the content receiving apparatus 1 and the display device 2 by connecting sockets on the same path to a preset address by the IP communication between the content receiving apparatus 1 and the display device 2. The controller 200 extracts the CW by using the received additional data, and applies the CW to the image signal to decode the encoded content and process the image signal (S34).

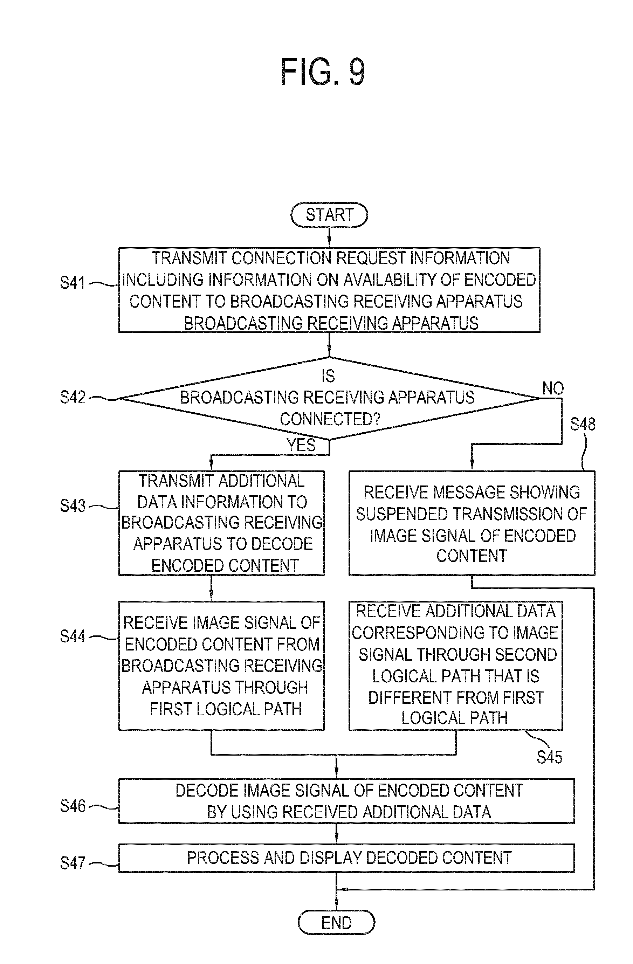

FIG. 9 is a control flowchart showing operations of the display device 2 according to the another embodiment.

The connection request information including information on availability of the encoded content is transmitted to the content receiving apparatus 1 (S41). It is checked whether the display device 2 is connected to the content receiving apparatus 1 (S42). If the display device 2 is not connected thereto, the message showing the suspended transmission of the image signal of the encoded content is transmitted (S48). If the display device 2 is connected thereto, the additional data information is transmitted to the content receiving apparatus 1 to decode the encoded content (S43). The image signal of the encoded content is transmitted by the content receiving apparatus 1 through the first logical path 212 (S44). The additional data corresponding to the image signal is transmitted through the second logical path 214 that is different from the first logical path 212 (S45). The first and second logical paths 212 and 214 may be different physical logical paths, or may share the same physical path, but may form a path only between the content receiving apparatus 1 and the display device 2 by connecting sockets on the same path to a preset address by the IP communication between the content receiving apparatus 1 and the display device 2. The controller 200 extracts the CW by using the received additional data, and applies the CW to the image signal to decode the encoded content and process the image signal (S46). The decoded image signal is processed by the image processor 220 and then transmitted to the display unit 230 for display (S47).

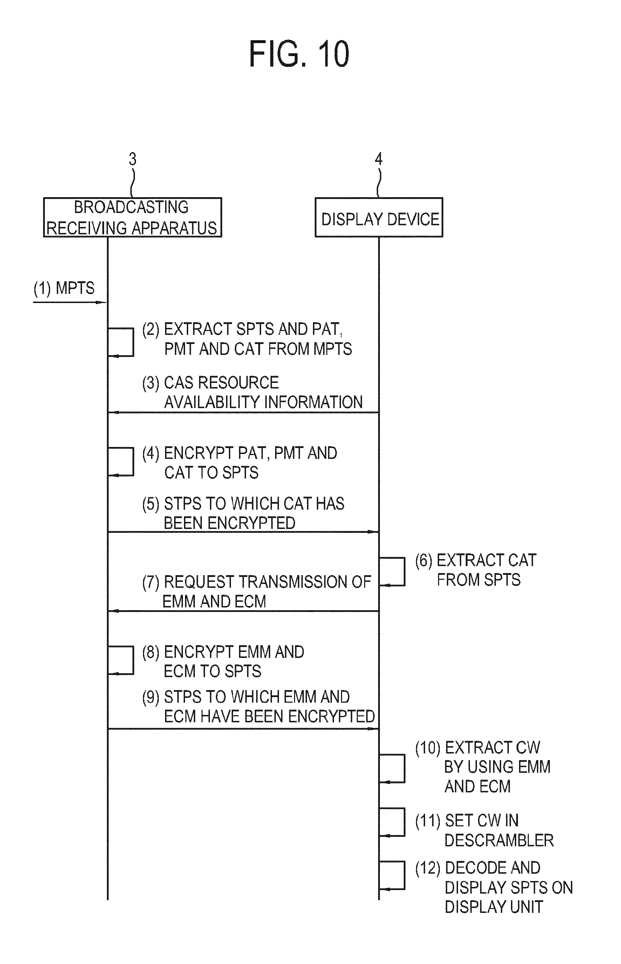

FIG. 10 is a flowchart showing operations performed between a conventional content receiving apparatus 3 and a conventional display device 4. The CAS has been briefly explained with reference to FIG. 1, and to compare the detailed operations, the operations performed between the conventional content receiving apparatus 3 and the conventional display device 4 will be explained.
(1) The content receiving apparatus 3 receives the MPTS.
(2) The content receiving apparatus 3 extracts the SPTS from the received MPTS, and extracts the PAT and PMT therefrom to decode the encoded content.
(3) The content receiving apparatus 3 receives the CAS availability information from the display device 4.
(4) The content receiving apparatus 3 encrypts the CAT to the SPTS.
(5) The content receiving apparatus 3 transmits to the display device 4 the SPTS to which the CAT has been encrypted and incorporated.
(6) The display device 4 extracts the CAT from the SPTS, into which the received CAT has been incorporated, through the filter.
(7) The display device 4 requests the content receiving apparatus 3 to transmit the EMM and ECM by using the extracted CAT.
(8) The content receiving apparatus 3 encrypts and incorporates the EMM and ECM into the SPTS.
(9) The content receiving apparatus 3 transmits to the display device 4 the SPTS into which the EMM and ECM have been incorporated.
(10) The display device 4 extracts the EMM and ECM from the SPTS, into which the EMM and ECM have been incorporated, through the filter. The display device 4 extracts and transmits the CW to the controller 200 as the CAS library and the smart card operate accordingly through the EMM and ECM.
(11) The extracted CW is set in the descrambler of the image processor 220.
(12) The SPTS is decoded and transmitted to the display unit 230 for display.

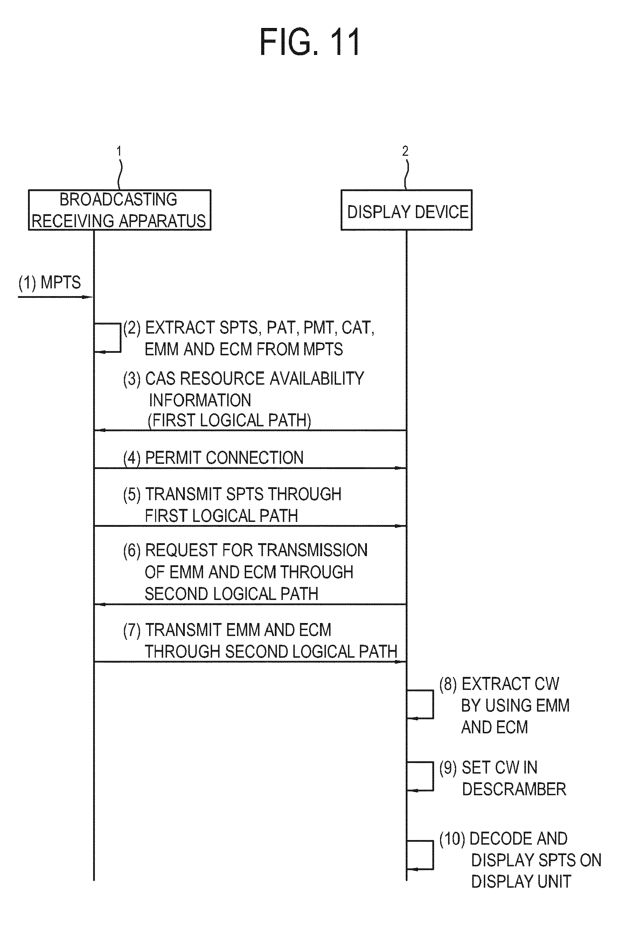

FIG. 11 is a flowchart showing operations performed between the content receiving apparatus 1 and the display device 2 according to the another embodiment. The operations performed between the content receiving apparatus 1 and the display device 2 according to the another embodiment will be explained with reference to FIG. 11.
(1) The content receiving apparatus 1 receives the MPTS.
(2) The content receiving apparatus 1 extracts the SPTS from the received MPTS, and extracts the PAT, PMT, EMM and ECM therefrom to decode the encoded content.
(3) The content receiving apparatus 1 receives the CAS availability information from the display device 2.
(4) The content receiving apparatus 1 accepts the connection of the display device 2.
(5) The content receiving apparatus 1 transmits the SPTS to the display device 2 through the first logical path 122.
(6) The display device 2 requests the content receiving apparatus 1 to transmit the EMM and ECM.
(7) The content receiving apparatus 1 transmits the EMM and ECM to the display device through the second logical path 124.
(8) The display device 2 extracts and transmits the CW to the controller 200 as the CAS and smart card operates accordingly through the EMM and ECM.
(9) The extracted CW is set in the descrambler of the image processor 220.
(10) The SPTS is decoded and transmitted to the display unit 230 for display.

As described above, unlike the conventional content receiving apparatus 3 in FIG. 10, the content receiving apparatus 1 according to the another embodiment as shown in FIG. 11 skips the incorporation process of the PAT, PMT, CAT, EMM and ECM as the additional data into the SPTS, and unlike the conventional display device 4 in FIG. 10, the display device 2 according to the another embodiment as shown in FIG. 11 receives the separated additional data through the second logical path 213 and does not need to extract the additional data through the filter. In other words, the additional data is transmitted to the display device separately from the SPTS which has already been transmitted to the display device via the first logical path.

The content receiving apparatus 1 may separately transmit the image signal and the additional data to the display device 2 to decode the encoded content so that resources of the content receiving apparatus 1 and the display device 2 may be saved, and a user may change a channel more promptly.

As described above, the content receiving apparatus according to the embodiments may separately transmit the image signal and the additional data used to decode the encoded content, to the display device and thus resources of the content receiving apparatus and the display device may be saved and a user may change a channel more promptly.

Although a few exemplary embodiments have been shown and described, it will be appreciated by those skilled in the art that changes may be made in these exemplary embodiments without departing from the principles of the invention, the range of which is defined in the appended claims.

## Claims

1. A content receiving apparatus connectable to a display device, the content receiving apparatus comprising:
a receiver which receives encoded content from an external source;
a communication part which is capable of communicating with the display device through a plurality of logical paths; and
a controller configured to extract image signal data of the encoded content and additional data corresponding to the image signal data, and to control the communication part to transmit the image signal data of the encoded content to the display device through a first logical path, and to separately transmit the additional data corresponding to the image signal data to the display device through a second logical path that is different from the first logical path.

2. The content receiving apparatus according to claim 1, wherein the controller is configured to transmit the additional data through the second logical path upon receiving from the display device a request for additional data to decode the encoded content.

3. The content receiving apparatus according to claim 1 or 2, wherein the controller receives connection request information comprising information on accessibility of the encoded content by the display device, and transmits the image signal data of the encoded content to the display device based on the information on accessibility.

4. The content receiving apparatus according to claim 3, wherein the controller determines the accessibility of the encoded content, and if it is determined that the encoded content is not accessible, suspends transmission of the image signal data of the encoded content to the display device, and transmits a message showing the suspended transmission of the image signal of the encoded content to the display device.

5. The content receiving apparatus according to any one of the preceding claims, wherein the additional data comprise a program association table PAT, a program map table PMT and a conditional access table CAT, entitlement management message EMM data and entitlement control message ECM data, and/or
wherein the plurality of logical paths is formed by a TCP/IP port of internet protocol IP communication.

6. A content receiving method for a content receiving apparatus connectable to a display device, the method comprising:
receiving encoded content from an external source;
extracting image signal data of the encoded content and additional data corresponding to the image signal data;
transmitting the image signal data of the encoded content to the display device through a first logical path; and
separately transmitting the additional data corresponding to the image signal data to the display device through a second logical path that is different from the first logical path.

7. The method according to claim 6, wherein the additional data is transmitted through the second logical path upon receiving from the display device a request for additional data to decode the encoded content.

8. The method according to claim 6 or 7, further comprising:
receiving connection request information comprising information on accessibility of the encoded content by the display device; and
transmitting the image signal data of the encoded content to the display device based on the information on accessibility.

9. The method according to claim 8, wherein the transmitting the image signal data comprises:
determining the accessibility of the encoded content;
suspending transmission of the encoded content to the display device if it is determined that the encoded content is not accessible; and
transmitting to the display device a message showing the suspended transmission of the encoded content.

10. The method according to any one of claims 6 to 9, wherein the additional data comprise a PAT, PMT, CAT and EMM data and ECM data, and/or
wherein the plurality of logical paths is formed by a TCP/IP port of IP communication.

11. A display device connectable to a content receiving apparatus, the display device comprising:
a communication part which is capable of communicating with the content receiving apparatus through a plurality of logical paths;
an image processor which processes image signal data transmitted to the communication part;
a display unit which displays the processed image signal thereon; and
a controller which receives image signal data of the encoded content from the content receiving apparatus through a first logical path, and to separately receive additional data corresponding to the image signal data through a second logical path that is different from the first logical path, and controls the image processor to decode the image signal data of the encoded content by using the received additional data.

12. The display device according to claim 11, wherein the controller controls the communication part to transmit to the content receiving apparatus a request for additional data to decode encoded content, and/or
wherein the controller transmits to the content receiving apparatus connection request information comprising information on accessibility of the encoded content by the display device, and receives the image signal of the encoded content from the content receiving apparatus, and the controller receives from the content receiving apparatus a message showing the suspended transmission of the image signal of the encoded content if it is determined that the encoded content is not available.

13. The display device according to any one of claims 11 or 12, wherein the additional data comprise a PAT, PMT, and CAT, and EMM data and ECM data, and/or
wherein the plurality of logical paths is formed by a TCP/IP port of IP communication.

14. A content receiving method for a display device connectable to a content receiving apparatus, the method comprising:
receiving image signal data of an encoded content from the content receiving apparatus through a first logical path;
separately receiving the additional data corresponding to the image signal data through a second logical path that is different from the first logical path; and
decoding the image signal data of the encoded content by using the received additional data.

15. The method according to claim 14, further comprising:
transmitting a request for additional data to the content receiving apparatus to decode the encoded content;
transmitting to the content receiving apparatus connection request information comprising information on availability of the encoded content; and
receiving an image signal of the encoded content from the content receiving apparatus,
wherein the receiving the image signal comprises receiving from the content receiving apparatus a message showing the suspended transmission of the image signal of the encoded content if it is determined that the encoded content is not available, and/or
wherein the additional data comprise a PAT, PMT, and CAT, and EMM data and ECM data, and/or the plurality of logical paths is formed by a TCP/IP port of IP communication.
